(19) Europäisches Patentamt
European Patent Office
Office européen des brevets

(11) EP 2 565 629 B1

(12) EUROPEAN PATENT SPECIFICATION

(45) Date of publication and mention
of the grant of the patent:
**02.10.2019 Bulletin 2019/40**

(51) Int Cl.:
**G01N 21/76** (2006.01)    G02B 6/42 (2006.01)

(21) Application number: **11774939.0**

(86) International application number:
**PCT/JP2011/060011**

(22) Date of filing: **25.04.2011**

(87) International publication number:
**WO 2011/136158 (03.11.2011 Gazette 2011/44)**

(54) **AUTOMATIC ANALYZER**

AUTOMATISCHES ANALYSEGERÄT

ANALYSEUR AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2010 JP 2010101799**

(43) Date of publication of application:
**06.03.2013 Bulletin 2013/10**

(73) Proprietor: **Hitachi High-Technologies
Corporation
Tokyo 105-8717 (JP)**

(72) Inventor: **TANOUE, Hidetsugu
Hitachinaka-shi
Ibaraki 312-8504 (JP)**

(74) Representative: **Strehl Schübel-Hopf & Partner
Maximilianstrasse 54
80538 München (DE)**

(56) References cited:
EP-A2- 0 424 634        WO-A1-2010/026950
JP-A- 1 292 221         JP-A- H0 572 136
JP-A- 2003 083 896      JP-A- 2009 069 024
US-A- 5 290 513         US-A1- 2008 260 577
US-A1- 2009 159 803

• C.A.MARQUETTE ET AL.: 'Semi-automated
membrane based chemiluminescent
immunosensor for flow injection analysis of
okadaic acid in mussels' ANALYTICA CHIMICA
ACTA vol. 398, no. 2- 3, 1999, pages 173 - 182,
XP055069965

• H.NAKAMURA ET AL.: 'A Compactly Integrated
Flow Cell with a Chemiluminescent FIA System
for Determining Lactate Concentration in Serum'
ANALYTICAL CHEMISTRY vol. 73, 15 January
2001, pages 373 - 378, XP001091766

EP 2 565 629 B1

**Description**

[Technical Field]

The present invention relates to an automatic analyzer for qualitative and quantitative measurement of a biological sample such as blood or urine.

[Background Art]

The automatic analyzer is used to measure the concentration of a target component in a biological sample such as blood or urine or to check the presence or absence of the target component. It has higher analysis speed and accuracy compared to manual measurement performed by a laboratory technician, so is becoming popular around major hospitals and testing centers. In particular, when the target component such as a thyroid-associated or infection-associated substance exists at a low concentration in the sample, the analysis requires detecting a faint ray at a high S/N (signal-to-noise ratio).

As a technology to allow such highly-sensitive analysis, for example, the Non-patent Document 1 listed below has been known in public. In this Non-patent document 1, a sample to be analyzed is introduced into a temperature-controlled flow cell (hereinafter, referred to as a cell) and induced to emit light. The emitted light from the sample is received by a photomultiplier as a photo detector through cell window glass (an optical window) to be converted to an electrical current signal; in this way, extremely faint light from a trace amount of the sample is detected by the detector. At this time, the detector is surrounded by a cooler and cooled to reduce noise, thereby achieving high S/N analysis.

In addition, the automatic analyzers have a recent trend of reducing consumption of a reaction solution introduced into the flow cell to reduce testing cost; such a trend requires a high S/N analysis technology capable of reducing the reaction solution consumption.

[List of Document(s) as to Prior Art]

[Non Patent Document]

Non Patent Document 1: Osawa Zenjiro, Chemiluminescence Kagaku Hakkou no Kiso-Ouyo Jirei (The basics of chemiluminescence and its application in case examples), 4.1 Chemiluminescence Sokutei no Genri to Souchi (The principle of chemiluminescence measurement and apparatuses for the measurement), Maruzen Co. Ltd., published on Dec. 30, 2003.

The document US 2008/260577 A1 discloses an automatic analyzer according to the preamble of claim 1.

JP H05 72136 A discloses the measurement of the concentration of an organic chlorine compound by decomposing the organic chlorine compound to chlorine gas and allowing the chlorine gas to react with a chemical illumination reagent, and detecting the light by a photoelectron amplifying tube.

C.A.MARQUETTE ET AL.: "Semi-automated membrane based chemiluminescent immunosensor for flow injection analysis of okadaic acid in mussels", ANALYTICA CHIMICA ACTA, vol. 398, no. 2- 3, 1999, pages 173-182 discloses a chemiluminescent immunosensor integrated in a flow injection analysis system.

EP 0 424 634 A2, US 2009/159803 A1 and US 5 290 513 A show different arrangements of hollow light transmission systems used for guiding light to a luminescence detector.

[Summary of Invention]

[Technical Problem]

In the above non-patent Document 1, the detector is surrounded by the cooler to be cooled for noise reduction; however, this makes the detector to be distanced from the optical window, causing not enough light being collected from a trace amount of light emission.

Consequently, the optical window may be made thinner to bring the detector closer to the window so that light can be prevented from leaking and decreasing to maintain a high S/N. However, when the detector is close to the flow cell, it has an influence of temperature of the flow cell, showing increased noise caused by heat. Since the flow cell is controlled to a specific temperature for stable analysis, the heat-caused noise can be reduced except for a trace amount of light emission. However, in the case of a trace amount of light emission, even if controlling to the specific temperature, an influence of the temperature from the flow cell is unavoidable, it is difficult to make high S/N analysis.

The present invention is an automatic analyzer for detecting and analyzing light emissions from a reaction solution containing a luminescent substance, and its object is to provide the automatic analyzer capable of enhancing sensitivity of a photo detector in detecting light emitted from the luminescent substance and, furthermore, reducing an influence of the temperature of the flow cell exerted on the detector to achieve stable high-S/N detection even for a trace amount of reaction solution.

[Solution to Problem]

The present invention relates to an automatic analyzer configured to detect light emitted from a reaction solution containing a luminescent substance through an optical window using a photo detector, processing the output from the photo detector, and analyzing the amount of the luminescent substance contained in the reaction solution; wherein the automatic analyzer is characterized by comprising an optical transmission system provided between the optical window and the photo detector to achieve the above object, and the optical transmission system including a light inlet facing the optical window, a light outlet facing a light-receiving surface of the photo detector, and a reflector configured to reflect light entered through the light inlet and directing the reflected light to the light outlet, so that the optical transmission system prevents a decrease in the amount of light from the luminescent substance, and achieves light detection and analysis without much influence from the temperature of the flow cell.

In addition, the following embodiments disclose features for achieving the object further effectively, which will be described in the embodiments.

[Advantages of Invention]

According to the present invention, the automatic analyzer has high-sensitivity and high-stability, which allows high S/N analysis of even a trace amount of a luminescent substance and improves reliability and usability of the automatic analyzer.

[Brief Description of Drawings]

Figure 1 illustrates a configuration of an automatic analyzer according to a first embodiment of the present invention.
Figure 2 illustrates a cross-section of an optical transmission system used in the first embodiment.
Figure 3 illustrates a relationship between mediums and an optical path.
Figure 4 illustrates an optical path used in the first embodiment.
Figure 5 illustrates a change in signal quantities in the first embodiment.
Figure 6 illustrates an influence of temperature in the first embodiment.
Figure 7 illustrates a configuration of an automatic analyzer according to a second embodiment of the present invention.
Figure 8 illustrates a cross-section of an optical transmission system used in the second embodiment.

[Description of Embodiments]

Embodiments of the present invention will be described below with reference to examples shown. In the examples, a cylindrical configuration is described as an example of an optical transmission system transmitting light from an optical window to a photo detector. However, its shape is not limited to the cylindrical configuration as long as a reflector is formed on an optical path.

[Embodiment 1]

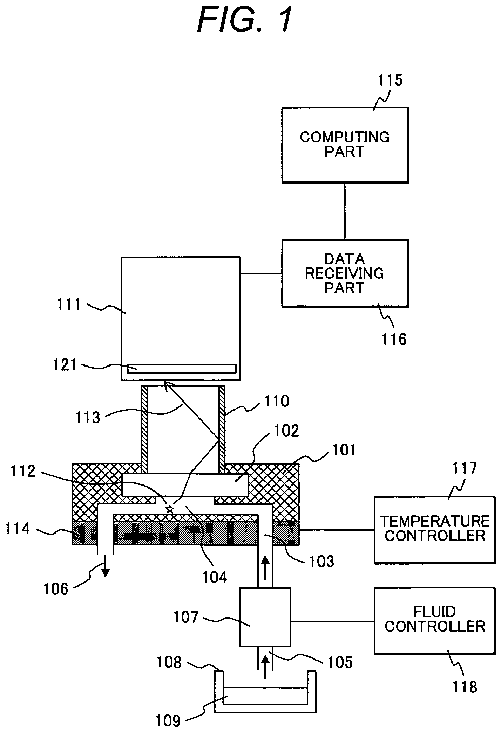

Figure 1 shows a configuration of an automatic analyzer according to a first embodiment of the present invention. A flow cell 101 is comprised of a flow passage 103 and an optical window 102. A reaction solution 109 containing a luminescent substance in a container 108 is sucked through an inlet 105 into the flow passage 103 by a pump 107 controlled by a fluid controller 118, and introduced to a photometric portion 104 constituting a part of the flow passage 103.

The optical window 102 may be quartz glass, transparent resin, or any other material as long as it can transmit an emission wavelength of a fluorescent substance 112 as a luminescent substance and is approximately 2 to 5 mm in thickness which gives adequate strength to resist against internal pressure of the flow passage 103. A temperature controller 117 controls a heater 114 to keep the reaction solution at a certain temperature in the photometric portion 104. For the heater 114, a Peltier device or any other device may be used as long as it can generate or absorb heat. The light emission of the reaction solution may be started by mixing a reagent or by other conditions. In either case, the reaction solution is introduced into the photometric portion 104 through the flow passage 103 by the fluid controller 118 so as to allow fluorescence to be emitted in proportion to the concentration of the target substance in the photometric portion 104 within the timeframe between the start and the end of the emission.

A ray 113 emitted from the fluorescent substance 112 in the reaction solution introduced into the photometric portion 104 is transmitted through the flow passage 103 and the optical window 102, reflected at the inner surface of an optical transmission system 110, and propagated to a photo multiplier 111, where the light is converted to an electric signal in a light-sensitive surface 121. In place of the photomultiplier 111, a device for converting light into an electric signal such as a photodiode (PD) may be used.

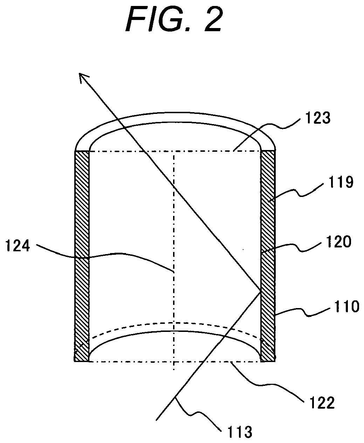

Figure 2 illustrates a cross-section of the optical transmission system 110 according to the first embodiment. The optical transmission system 110 has a hollow cylindrical shape in the present embodiment, and its inner surface 120 is a reflector which reflects the ray 113 entered from a light inlet 122 to let it exit from a light outlet 123 on the opposite side. The ray 113 exited is received by the photomultiplier 111 facing the outlet. According to the present invention, the reflector is made on the inner surface of the optical transmission system, but in other examples not forming part of the present invention, it may be on the outer surface thereof.

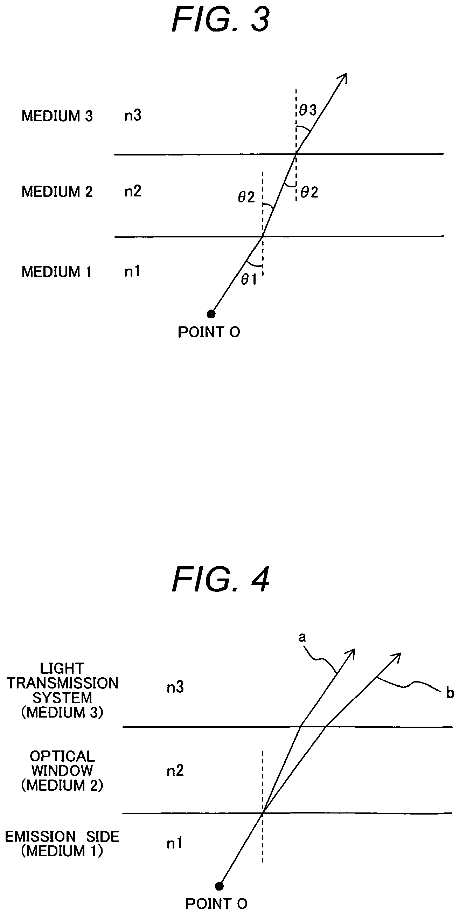

Next, an optical path of the light propagating from the reaction solution in the flow cell to the optical transmission system through the optical window will be discussed. As shown in Fig. 3, provided that a ray of light is emitted from an origin at a given point (point O) in a medium 1 (refractive index n1), transmitted through a medium 2 (refractive index n2), and exited to a medium 3 (refractive index n3), the following equation is true by the Snell's law. (For simplified illustration, the ray of light is shown in a two-dimensional plane, and each of the inner angles θ1, θ2, θ3 is an angle of incident of the ray with respect to the normal of the medium boundary plane.)

$$n1*\sin\theta1 = n2*\sin\theta2 \dots (1)$$

$$n2*\sin\theta2 = n3*\sin\theta3 \dots (2)$$

When the emission side is air, the optical window is glass, and the optical transmission system is air, a ray entering from the point O into the optical window at an angle θ1 = 30° has angles θ2 and θ3 as shown in Table 1.

[Table 1]

Table 1

| Medium | Medium name | Refractive index | Normal incidence angle | Angle [°] |
|--------|-------------|------------------|------------------------|-----------|
| Medium 1 | Emission side (air) | 1 | θ1 | 30 |
| Medium 2 | Optical window (glass) | 1.5 | θ2 | 19 |
| Medium 3 | Light transmission assembly (air) | 1 | θ3 | 30 |

In the present embodiment, however, a reaction solution is introduced into the flow cell, so the medium 1 in the emission side has a refractive index of 1.3 corresponding to water; thus θ2 and θ3 have the following angles in Table 2.

[Table 2]

Table 2

| Medium | Medium name | Refractive index | Normal incidence angle | Angle [°] |
|--------|-------------|------------------|------------------------|-----------|
| Medium 1 | Emission side (water) | 1.3 | θ1 | 30 |
| Medium 2 | Optical window (glass) | 1.5 | θ2 | 26 |
| Medium 3 | Light transmission assembly (air) | 1 | θ3 | 41 |

A relationship of these data is shown in Fig. 4. Line a is an optical path when the emission side is air and Line b is an optical path when it is the reaction solution (corresponding to water) according to the present embodiment. As shown in the figure, when the rays of light from the origin travel to the same direction, the light in the flow cell in which the emission side is the reaction solution is easier to turn outward from the central axis compared to when the emission side is gas, that is, the former condition is easier to dissipate light. Therefore, in the present embodiment, as shown in Fig. 1, the light inlet 122 of the optical transmission system 110 is put in contact with the optical window 102 to transmit the light from the reaction solution without dissipation.

On the other hand, a light-receiving portion of the photomultiplier 111 is made larger than the light outlet 123 of the optical transmission system 110 to receive even a ray exited at a low angle, thereby preventing the dissipation of light. For example, when the optical transmission system 110 is a hollow cylindrical configuration with an outer diameter of about 14 mm and an inner diameter of about 13 mm, the receiving surface of the photomultiplier is about 20 mm in diameter. A mirror base material 119 can be glass, metal, acrylic, resin, or any other material as long as it can maintain the reflector 120 smooth and stable. The reflector 120 can be made of highly reflective material such as sputtered metal ions (Al, Au, etc.) or plating (a refractive index of about 85%) or a reflective film (about a few hundred microns, a refractive index of at least 95%).

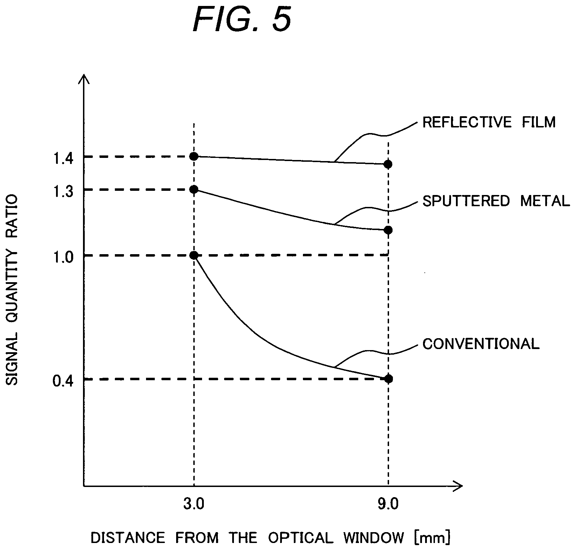

Figure 5 is a graph illustrating a change in signal quantities in the present embodiment on the basis of a distance of 3.0 mm from the optical window 102 to the photomultiplier 111 (a signal quantity ratio of 1), illustrating a change in signal quantities when the photomultiplier 111 is moved away from the optical window 102. In the present embodiment, the light inlet 122 of the optical transmission system is in contact with the optical window 102, so that no light dissipates within a distance of 3.0 mm; furthermore, when the photomultiplier 111 is moved away, the reflector formed by a reflective film or sputtered metal according to the present embodiment can increase the signal quantity while in the conventional example, the signal quantity decreases to 40%.

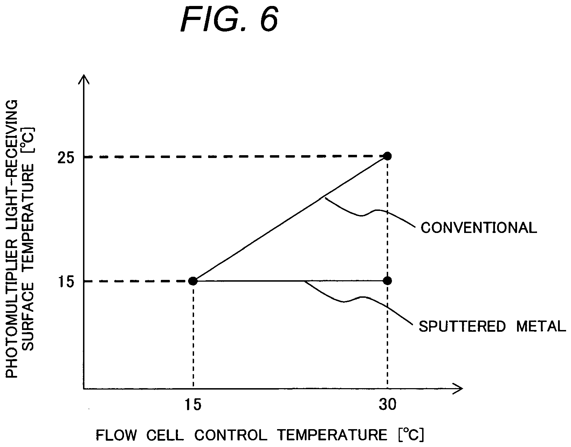

Figure 6 illustrates a relationship between the control temperature of the photometric portion 104 of the flow cell 101 and the temperature of the light-sensitive surface 121 of the photomultiplier 111 when the inner surface 120 of the optical transmission system 110 is coated with sputtered metal ions and the photomultiplier 111 is located at 9.0 mm. Conventionally, the temperature of the photomultiplier has shown an increase along with the control temperature of the flow cell, but in the present embodiment, the temperature of the photomultiplier shows almost no change. Thus, according to the present embodiment, the heat insulation between the photomultiplier 111 and the optical window 112 is increased, which can prevent an increase or a change in temperature-caused noise in the photomultiplier 111.

[Example 2]

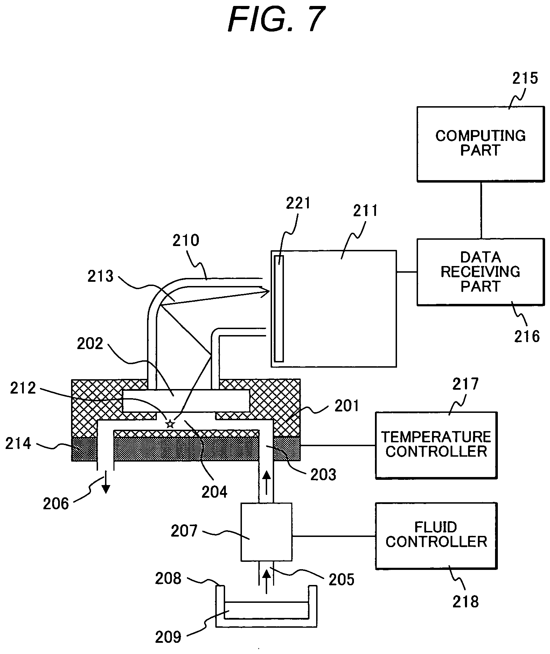

Figure 7 illustrates a second embodiment of the present invention. A flow cell 201 is comprised of a flow passage 203 and an optical window 202. A reaction solution 209 containing a luminescent substance in a container 208 is sucked through a fluid inlet 205 into the flow passage 203 by a pump 207 controlled by a fluid controller 218, and introduced to a photometric portion 204 constituting a part of the flow passage 203. The optical window 202 may be quartz glass, transparent resin, or any other material as long as it can transmit the emission wavelength of a fluorescent substance 212 as the luminescent substance and is approximately 2 to 5 mm in thickness which gives the strength to resist against the internal pressure of the flow passage 203. A temperature controller 217 controls a heater 214 to keep the reaction solution at a certain temperature in the photometric portion 204. For the heater 214, a Peltier device or any other device may be used as long as it can generate or absorb heat.

The light emission of the reaction solution may be started by mixing a reagent or applying voltage, and in either case, the reaction solution is introduced to the photometric portion through the flow passage 203 by the fluid controller 218 to allow fluorescence to be emitted in proportion to the concentration of the target substance in the photometric portion 204 within the timeframe between the start and the end of the emission. A ray 213 emitted from the fluorescent substance 212 in the reaction solution is transmitted through the flow passage 203 and the optical window 202, reflected by the surface of an optical transmission system 210, and propagated to a photomultiplier 211, where the light is converted to an electric signal in a light-sensitive surface 221 of the photomultiplier. The photomultiplier 211 is a photo detector for converting light to electrons and multiplying them. Many photomultipliers have a long cylindrical structure, which makes the photomultiplier 211 to protrude in a direction perpendicular to the flow cell. For this reason, a central axis of the optical transmission system 210 is curved to make central axes of the light inlet and the light outlet face different directions, thereby reducing the overall size of the system. The angle between the axes is preferably within 90 degrees.

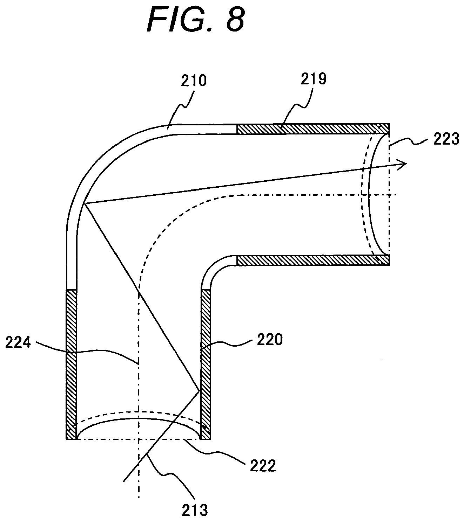

Figure 8 illustrates a cross-section of the optical transmission system 210 according to the second embodiment. The optical transmission system 210 has a hollow configuration, and its inner surface 220 is a reflector which reflects the ray 213 entered from a light inlet 222 to let it exit from a light outlet 223 on the opposite side. For an illustrative purpose, the reflector is made on the inner surface 220 but it may be on the outer surface of the optical transmission system 210. The ray 213 exited is received by the photomultiplier 211 facing the outlet.

In the same manner as the first embodiment, the optical window and the light inlet 222 are disposed in contact with each other to prevent light dissipation, and a light-receiving portion of the photomultiplier 211 is made larger than the light outlet 223 so as to receive even a ray exited at a low angle.

A mirror base material 219 can be glass, metal, acrylic, resin, or any other material as long as it can maintain the reflector 220 smooth and stable. The reflector 220 can be made of highly reflective material such as sputtered metal ions (Al, Au, etc.) or plating (a refractive index of about 85%) or a reflective film (about a few hundred microns, a refractive index of at least 95%). When it is difficult to form a curved surface with a reflective film, the optical transmission system 210 may be divided into a plurality of parts by bent portions and manufactured separately.

As described above, according to the present embodiment, a central axis 224 of the optical transmission system 210 can be curved, so that the automatic analyzer can be downsized according to its system structure; in this case also, a trace amount of reaction solution can be analyzed at a high S/N without sacrificing high sensitivity and high stability.

[Reference Signs List]

101, 201 ... flow cell, 102, 202 ... optical window, 103, 203 ... flow passage, 104, 201 ... photometric portion, 105, 205 ... fluid inlet, 106, 206 ... fluid outlet, 107, 207 ... pump, 108, 208 ... container, 109, 209 ... reaction solution, 110, 210 ... optical transmission system, 111, 211 ... photomultiplier, 112, 212 ... fluorescent substance, 113, 213 ... ray, 114, 214 ... heater, 119, 219 ... mirror base material, 120, 220 ... reflector (inner surface), 122, 222 ... light inlet, 123, 223 ... light outlet, 124, 224 ... central axis of the optical transmission system.

## Claims

1. An automatic analyzer for analyzing an amount of a luminescent substance contained in a reaction solution by processing data from a photo detector, comprising:

   - a flow cell (101) including a flow passage (103, 203) for feeding the reaction solution (109, 209) containing the luminescent substance,
   - a temperature controller (117, 208) for controlling flow passage temperature,
   - an optical window (102, 202) of the flow cell (101) for allowing light from the luminescent substance to be emitted outside the flow passage (103, 203), said optical window (102, 202) being a sidewall of the flow passage (103, 203), being in direct contact with the reaction solution (109, 209) when the reaction solution (109, 209) is in the flow passage (103, 203), and said optical window (102, 202) having adequate strength to resist against the internal pressure of the flow passage (103, 203),
   - the photo detector (111, 211) for detecting the light from the optical window, and
   - an optical transmission system (110, 210),

   characterized in that the optical transmission system (110, 210) has a hollow configuration including:

   - a light inlet (122, 222) facing the optical window,
   - a light outlet (123, 223) facing a light-receiving surface of the detector (111, 211), and
   - a reflector (120, 220) for reflecting the light entered from the light inlet (122, 222) and propagating the light to the light outlet (123, 223), said reflector (120, 220).

      ◦ being made on an inner surface of said hollow optical transmission system (110, 210) and
      ◦ being formed by a reflective film or sputtered metal or plating.

2. The automatic analyzer according to claim 1, wherein the light-receiving surface (111, 211) of the photo detector is larger than the light outlet (123, 223) facing the light-receiving surface.

3. The automatic analyzer according to claim 1 or 2, wherein the optical window (102, 202) and the light inlet (122, 222) are in contact and facing with each other.

## Patentansprüche

1. Automatische Analysevorrichtung zum Analysieren einer Menge einer in einer Reaktionslösung enthaltenen lumineszierenden Substanz durch Verarbeiten von Daten von einem Fotodetektor, umfassend:

   - eine Durchflusszelle (101), die einen Strömungskanal (103, 203) zum Zuführen der die lumineszierende Substanz enthaltenden Reaktionslösung (109, 209) umfasst,
- eine Temperatursteuerung (117, 208) zum Steuern der Vorlauftemperatur,
- ein optisches Fenster (102, 202) der
Durchflusszelle (101), um die Emission von Licht der lumineszierenden Substanz nach außerhalb des Durchflusskanals (103, 203) zu ermöglcihen, wobei das optische Fenster (102, 202) eine Seitenwand des Durchflusskanals (103, 203) ist und in direktem Kontakt mit der Reaktionslösung (109, 209) steht, wenn sich die Reaktionslösung (109, 209) im Durchflusskanal (103, 203) befindet, und wobei das optische Fenster (102, 202) eine ausreichende Festigkeit aufweist, um dem Innendruck des Durchflusskanals (103, 203) zu widerstehen,
- den Fotodetektor (111, 211) zum Erfassen des Lichts aus dem optischen Fenster und
- ein optisches Übertragungssystem (110, 210),

**dadurch gekennzeichnet, dass** das optische
Übertragungssystem (110, 210) eine hohle Konfiguration aufweist, die Folgendes umfasst:

- einen Lichteinlass (122, 222), der dem optischen Fenster zugewandt ist,
- einen Lichtauslass (123, 223), der einer lichtempfangenden Oberfläche des Detektors (111, 211) zugewandt ist, und
- einen Reflektor (120, 220) zum Reflektieren des am Lichteinlass (122, 222) eingelassenen Lichts und zum Weiterleiten des Lichts zu dem Lichtauslass (123, 223), wobei der Reflektor (120, 220):

  o auf einer Innenfläche des optischen Hohlübertragungssystems (110, 210 und 110, 210) hergestellt ist,
  o die durch einen reflektierenden Film oder ein gesputtertes Metall oder eine Beschichtung gebildet wird.

**2.** Automatische Analysevorrichtung nach Anspruch 1, wobei die lichtempfangende Oberfläche (111, 211) des Fotodetektors größer ist als der der lichtempfangenden Oberfläche zugewandte Lichtauslass (123, 223).

**3.** Automatische Analysevorrichtung nach Anspruch 1 oder 2, wobei das optische Fenster (102, 202) und der Lichteinlass (122, 222) in Kontakt stehen und einander zugewandt sind.

**Revendications**

**1.** Analyseur automatique pour analyser une quantité d'une substance luminescente contenue dans une solution de réaction par traitement de données provenant d'un photodétecteur, comprenant :

- une cellule (101) de flux incluant un passage (103, 203) de flux pour alimenter la solution de réaction (109, 209) contenant la substance luminescente,
- un contrôleur (117, 208) de température pour commander une température de passage de flux,
- une fenêtre optique (102, 202) de la cellule (101) de flux pour permettre qu'une lumière provenant de la substance luminescente soit émise vers l'extérieur du passage (103, 203) de flux, ladite fenêtre optique (102, 202) étant une paroi latérale du passage (103, 203) de flux, étant en contact direct avec la solution de réaction (109, 209) lorsque la solution de réaction (109, 209) est dans le passage (103, 203) de flux, et ladite fenêtre optique (102, 202) ayant une résistance adéquate pour résister à la pression interne du passage (103, 203) de flux,
- le photodétecteur (111, 211) pour détecter la lumière provenant de la fenêtre optique, et
- un système (110, 210) de transmission optique,

**caractérisé en ce que** le système (110, 210) de transmission optique a une configuration creuse incluant :

- une entrée (122, 222) de lumière faisant face à la fenêtre optique,
- une sortie (123, 223) de lumière faisant face à une surface de réception de lumière du détecteur (111, 211), et
- un réflecteur (120, 220) pour réfléchir la lumière entrée depuis l'entrée (122, 222) de lumière et propager la lumière jusqu'à la sortie (123, 223) de lumière, ledit réflecteur (120, 220)

  ∘ étant constitué sur une surface intérieure dudit système (110, 210) de transmission optique creux et
  ∘ étant formé par un film réfléchissant ou un métal déposé par projection ou un placage.

**2.** Analyseur automatique selon la revendication 1, dans lequel la surface de réception de lumière (111, 211) du photodétecteur est plus grande que la sortie (123, 223) de lumière faisant face à la surface de réception de lumière.

3. Analyseur automatique selon la revendication 1 ou 2, dans lequel la fenêtre optique (102, 202) et l'entrée (122, 222) de lumière sont en contact l'une avec l'autre et se font face l'une l'autre.

# FIG. 1

# FIG. 2

# FIG. 3

MEDIUM 3    n3

MEDIUM 2    n2

MEDIUM 1    n1

POINT O

# FIG. 4

LIGHT
TRANSMISSION
SYSTEM          n3
(MEDIUM 3)

OPTICAL
WINDOW         n2
(MEDIUM 2)

EMISSION SIDE
(MEDIUM 1)      n1

POINT O

# FIG. 5

## *FIG. 6*

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008260577 A1
- JP H0572136 A
- EP 0424634 A2
- US 2009159803 A1
- US 5290513 A

**Non-patent literature cited in the description**

- 4.1 Chemiluminescence Sokutei no Genri to Souchi (The principle of chemiluminescence measurement and apparatuses for the measurement). **OSAWA ZENJIRO.** Chemiluminescence Kagaku Hakkou no Kiso-Ouyo Jirei (The basics of chemiluminescence and its application in case examples). Maruzen Co. Ltd, 30 December 2003
- **C.A.MARQUETTE et al.** Semi-automated membrane based chemiluminescent immunosensor for flow injection analysis of okadaic acid in mussels. *ANALYTICA CHIMICA ACTA,* 1999, vol. 398 (2- 3), 173-182